(19) Europäisches Patentamt
European Patent Office
Office européen des brevets

(11) **EP 4 287 076 B1**

(12) **EUROPEAN PATENT SPECIFICATION**

(45) Date of publication and mention
of the grant of the patent:
**23.10.2024 Bulletin 2024/43**

(21) Application number: **22190221.6**

(22) Date of filing: **12.08.2022**

(51) International Patent Classification (IPC):
*G06N 3/063* (2023.01)     *G06N 3/049* (2023.01)
*G06F 15/80* (2006.01)

(52) Cooperative Patent Classification (CPC):
**G06N 3/063; G06F 15/8007; G06N 3/049**

(54) **NEURO-SYNAPTIC PROCESSING CIRCUITRY**

NEUROSYNAPTISCHE VERARBEITUNGSSCHALTUNG

CIRCUIT DE TRAITEMENT NEURO-SYNAPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.06.2022 US 202263347634 P**

(43) Date of publication of application:
**06.12.2023 Bulletin 2023/49**

(73) Proprietor: **Stichting IMEC Nederland
5656 AE Eindhoven (NL)**

(72) Inventors:
• **Yousefzadeh, Amirreza
3001 Leuven (BE)**
• **Van Schaik, Gert-Jan
3001 Leuven (BE)**
• **Sifalakis, Emmanouil
3001 Leuven (BE)**

(74) Representative: **IP HILLS NV
Bellevue 5/501
9050 Gent-Ledeberg (BE)**

(56) References cited:
• **ZAPATA MIREYA ET AL: "Efficient Configuration for a Scalable Spiking Neural Network Platform by means of a Synchronous Address Event Representation bus", 2018 NASA/ESA CONFERENCE ON ADAPTIVE HARDWARE AND SYSTEMS (AHS), IEEE, 6 August 2018 (2018-08-06), pages 241 - 248, XP033451178, DOI: 10.1109/AHS.2018.8541463**
• **MICHAEL GAUTSCHI ET AL: "A near-threshold RISC-V core with DSP extensions for scalable IoT Endpoint Devices", ARXIV.ORG, CORNELL UNIVERSITY LIBRARY, 201 OLIN LIBRARY CORNELL UNIVERSITY ITHACA, NY 14853, 30 August 2016 (2016-08-30), XP080723121**
• **PEEMEN MAURICE ET AL: "The neuro vector engine: Flexibility to improve convolutional net efficiency for wearable vision", 2016 DESIGN, AUTOMATION & TEST IN EUROPE CONFERENCE & EXHIBITION (DATE), EDAA, 14 March 2016 (2016-03-14), pages 1604 - 1609, XP032895186**

## Description

### Technical Field

Various example embodiments relate to, amongst others, to a neuro-synaptic processing circuitry for performing neuro-synaptic operations.

### Background

Digital neuromorphic processors are processors that are specifically designed to efficiently perform neuro-synaptic operations according to certain arrangements of neurons and synapses of a neural network, e.g. a deep neural network, DNN, or spiking neural network, SNN.

Such neural network contains two main components, neurons and synapses. Neurons contain a memory and compute elements, and they communicate with each other by sending spikes through the synaptic connections that connect the neurons with each other. In a digital neuromorphic processor, the states of the neurons and weights of the synapsis may be represented by digital values. The processor then performs instructions according to a computer program code that updates the neuron states according to the weighted inputs of synapsis, and that generates new output values for other neurons.

One trade-off in the design of digital neuromorphic processors is flexibility against efficiency. The more flexible a digital neuromorphic processor, the more types of neural networks it can simulate. This flexibility comes at the expense of efficiency expressed in area or power consumption.

One type of flexible architecture are so called Large Scale Digital Neuromorphic Processors, LSDNPs, that are programmable to deploy most varieties of large-scale neural networks that can have thousands or even millions of neurons. Such LSDNP can contain one or more neuromorphic processors, sometimes also referred to as neuromorphic cores. Each core may then emulate a portion of the neurons, allowing parallel processing of neurons across the different cores. Within such core, time-multiplexing may be applied wherein one core processes different sets of neurons in time. Neurons emulated on different cores may then exchange spikes through a network on chip that forwards the spikes from one neuron to another in the form of packets of data.

In order to perform the neuromorphic operations, a neuromorphic processor or core contains a data memory to store neuron states and synaptic weights, and contains processing elements that can perform the actual operations using the stored neuron states and synaptic weights.

One possible type of neuromorphic processor may contain a general purpose processor for performing the actual operations and thereby fulfil the function of a processing element. This type of neuromorphic processor has several shortcomings. First, the processor might be sufficient during a sparse activity of the neuron, but will be overloaded during peak activity. This can result in backpressure in the data-flow pipeline of the system, i.e. the interfacing with the data memory, further resulting in increased latency and thus inefficient use of the processor. This can also result in a loss of packets and accuracy when overflow is solved by flushing of the data. Second, each input event or spike typically updates many neurons. In this case, the general-purpose processor needs to read repetitive instructions from the instruction memory once for each neuron update. Therefore, this method of processing neural instructions is not energy efficient.

Another type of neuromorphic processor may contain hardware acceleration for specific neuromorphic operations. This however limits the flexibility of the processor to the operations supported by the hardware acceleration. Zapata Mireya et al: "Efficient Configuration for a Scalable Spiking Neural Network Platform by means of a Synchronous Address Event Representation bus", 2018 NASA/ESA CONFERENCE ON ADAPTIVE HARDWARE AND SYSTEMS (AHS), IEEE, 6 August 2018 (2018-08-06), pages 241-248, DOI: 10.1109/AHS.2018.8541463, presents a simple and efficient centralized configuration solution for a scalable multichip platform based on FPGA and PSoC devices. Michael Gautschi et al: "A near-threshold RISC-V core with DSP extensions for scalable IoT Endpoint Devices", ARXIV.ORG, CORNELL UNIVERSITY LIBRARY, 201 OLIN LIBRARY CORNELL UNIVERSITY ITHACA, NY 14853, 30 August 2016 (2016-08-30), describes the design of an open-source RISC-V processor core specifically designed for NT operation in tightly coupled multicore clusters. Preemen Maurice et al: "The neuro vector engine: Flexibility to improve convolutional net efficiency for wearable vision",2016 DESIGN, AUTOMATION & TEST IN EUROPE CONFERENCE & EXHIBITION (DATE), EDAA, 14 March 2016 (2016-03-14), pages 1604-1609, presents the Neuro Vector Engine (NVE) a SIMD accelerator for ConvNets for visual object classification, targeting portable and wearable devices.

### Summary

The scope of protection sought for various embodiments of the invention is set out by the independent claims.

The embodiments and features described in this specification that do not fall within the scope of the independent claims, if any, are to be interpreted as examples useful for understanding various embodiments of the invention.

Amongst others, it is an object of the present disclosure to alleviate the above addressed shortcomings and to provide an improved neuro-synaptic core.

According to a first example aspect, a neuro-synaptic processing circuitry for performing neuro-synaptic operations based on synaptic weights and neuron states is disclosed. The circuitry comprising:

- a data memory for storing the synaptic weights and neuron states; the data memory having a memory port for loading and storing data from and to the data memory;
- a plurality of neuron processing elements, NPEs, configurable to execute NPE instructions in parallel according to a single instruction, multiple data, SIMD, instruction set; wherein the NPEs have access to respective portions of the memory port; the SIMD instruction set comprising instructions for loading and storing the synaptic weights and neuron states from and to the memory port, and for performing the neuro-synaptic operations;
- a general-purpose central processing unit, GP-CPU, configured to execute program code;
- a loop buffer having a register-based memory; an address calculation unit; and a program counter;

wherein the loop buffer is configured to:

- receive a micro-code kernel from the GP-CPU in the register-based memory according to the program code; the micro-code kernel comprising the NPE instructions;
- upon instruction of the GP-CPU, execute the micro-code kernel by iteratively providing, the NPE instructions to the NPEs for execution;
- upon a load or store instruction, further providing a memory address stored in the loop buffer to the memory port and, by the address calculation unit, updating the memory address.

In other words, a neuron processing element, NPE, is a processor having its own instruction set supporting neuromorphic operations on data from the data memory representing synaptic weights and neuron states. The data is retrieved from a data memory addressable from the memory port. This memory port retrieves a data word from the data memory that can contain all data for all the NPEs. The effect is that the NPEs can operate in parallel upon one data fetch from the memory. The data memory does not need to be structurally divided between neuron states and synaptic weights as the location of the data in the memory is configurable by the memory address in the register-based memory that is accessible by the GP-CPU. Further, as the loop buffer updates the memory address along the iterations, the NPEs can sequentially perform operations for different sets of neurons without intervention of the GP-CPU. As a consequence, parallel and time-multiplexed operation is supported without intervention of the GP-CPU. Therefore, the function of the GP-CPU may be limited to the control of the neuromorphic operations according to its program code. This way, the GP-CPU is not a bottleneck in the execution pipeline. Further, as the instructions for the NPEs are provided by the GP-CPU, flexibility of the emulated neural network is maintained, even at run-time. As such different neural networks may be emulated on the same circuitry in a time-multiplexed manner by alternating between micro-code kernels each having a different memory address for the associated neuron states and synaptic weights. This circuitry has the advantage that the GP-CPU may be implemented as a pure micro-controller thereby reducing the footprint of the GP-CPU. This circuitry further has the advantage that the flexibility in supported neural network architectures can be very large because of the configurable micro-code kernels.

As the memory address is configurable by the GP-CPU, memory ranges and locations in the data memory for storing the synaptic weights and neuron states are configurable by the GP-CPU.

As a result, there are no separate data memories needed for the synaptic weights and neuron states, and all NPEs can receive such weights and states from all over the data memory. It is thus an advantage that no trade-off must be made between storage for either synaptic weights and neuron states.

According to example embodiments, the GP-CPU is further configured to, under instruction of the program code, upon a triggering event, to start execution of the micro-code kernel. Such triggering event may for example be in the form of an interrupt initiated by other components, e.g. from the NPEs, or from external components interfacing with the circuitry.

According to example embodiments, the loop buffer is further configured to store a plurality of micro-code kernels in the register-based memory and to execute a select micro-code kernel upon instruction of the GP-CPU.

This allows executing different micro-code kernels in a time-multiplexed way without the need for writing each time a micro-code kernel into the register-based memory.

According to example embodiments, the GP-CPU is further configured to, under instruction of the program code, disable one or more of the NPEs.

When an NPE is disabled it will not execute any of the instructions provided to it by the loop buffer. Further, the memory interface and port to the disabled NPEs may also be disabled. This allows further reducing the power consumed by the NPEs and memory port when not all NPEs can or need to be used in parallel.

According to example embodiments, the synaptic weights and/or neuron states in the data memory have a configurable data-type, such as one or more fixed-point data-type and/or one or more data-types with a fixed-point portion and a scaling portion; and wherein the SIMD instruction set comprises instructions for converting said data-type to a data-type supported by the NPEs.

Different types of neural networks may benefit from different data-types for optimal performance within the supported bit width of the data memory and memory port. The conversion instruction allows supporting the different data types while keeping the implementation of the NPE simple, i.e. restricted to one data type.

According to example embodiments the synaptic weights and/or neuron states in the data memory have a configurable bit width fitting within sub-portions of the respective portions of the memory port; and the SIMD instruction set comprises instructions for selecting said sub-portion from different positions within the respective portions.

For example, such portion may be 16 bits wide while the sub-portion is 4 or 8 bits. In such case, two different values may be stored in this 16 bit location. By the instructions, the NPE may then select one of these values during one iterations and another value during another iteration. Or alternatively, different values may be used in a single iteration while only one memory load instruction is needed. This results in a reduction of memory load or store operations and in memory size needed to store all the values in memory.

According to example embodiments, the NPEs are configured to, upon triggering a condition during the execution, trigger an output event.

In other words, besides performing operations on the data loaded and stored through the memory port, the NPEs may also trigger an event upon certain conditions. Such condition may be specified by one or more of the NPEs instructions. By such triggering event, for example the firing of a neuron may be emulated.

According to example embodiments, the neuro-synaptic processing circuitry further comprises an event generation circuitry configured to receive the output events from the NPEs, to buffer the output events, and to interrupt the GP-CPU to signal the occurrence of the output events.

The event generation circuitry allows signalling of certain states of the NPEs during the execution of the micro-code kernel. This way, the GP-CPU may already prepare further processing of the event before the execution of the micro-code kernel is finished, e.g. prepare the update of neuron states that are triggered by the event.

The event generation circuitry may further be configured to include an address of a neuron generating the output event into the packet.

This allows the GP-CPU to identify the source of the event and to handle the event accordingly. Such address may be in the form of an identification of the NPE that triggered the event. Such address may also include the iteration in the loop buffer during which the event was triggered. With such information the GP-CPU may determine in which location of the emulated neural network the event was generated, i.e. which neuron or synapses generated the event.

According to a second example aspect a neuro-synaptic multicore processing circuitry is disclosed that further comprises a plurality of neuro-synaptic processing circuitries according to the first example aspect.

This neuro-synaptic multicore processing circuitry may further comprising a network-on-chip, NoC, for transmitting packets with events among the plurality of neuro-synaptic processing circuitries.

According to example embodiments, the NoC is a multicast, source-based addressing NoC.

According to example embodiments, the neuro-synaptic multicore processing circuitry further comprises a shared memory accessible by the GP-CPUs; and wherein a respective GP-CPU is configured to, under instruction of the program code, pre-fetch the synaptic weights and/or neuron states from the shared memory to the data memory.

This further allows storing more data while limiting the data memory within the neuro-synaptic processing circuitries.

## Brief Description of the Drawings

Some example embodiments will now be described with reference to the accompanying drawings.

Fig. 1 shows an example embodiment of a neuro-synaptic processing circuitry;

Fig. 2 shows an example embodiment of a neuro-synaptic processing circuitry;

Fig. 3 shows an example embodiment of a large scale digital neuromorphic processor comprising a plurality of neuro-synaptic processing circuitries.

## Detailed Description of Embodiment(s)

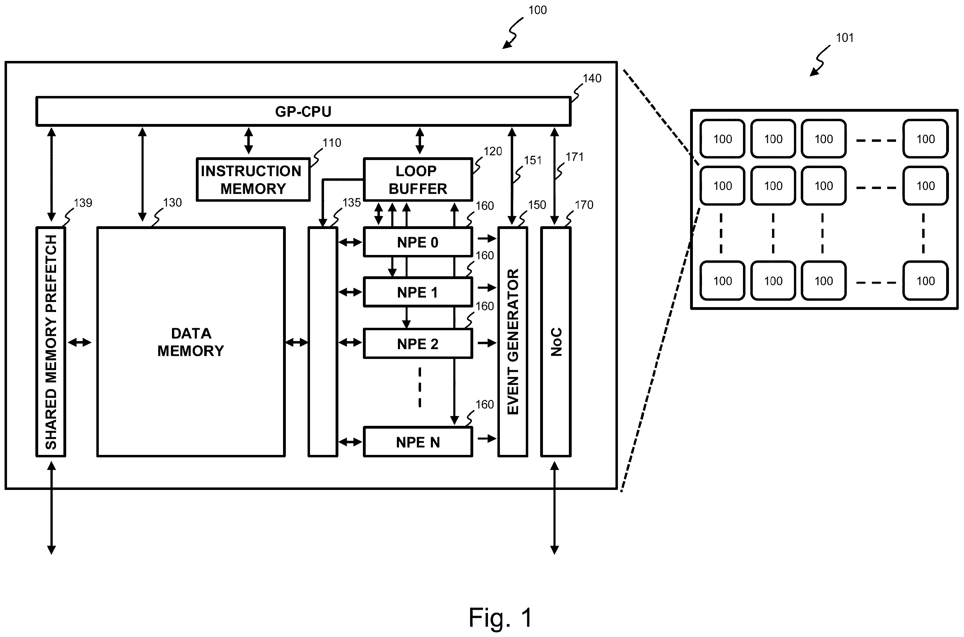

Fig. 1 shows a neuro-synaptic processing circuitry 100 according to an example embodiment. Different instances of such circuitry 100 may be used in a large scale digital neuromorphic processor, LSDNP, 101. Circuitry 100 is capable of performing neuro-synaptic operations based on synaptic weights and neuron states as further described below. Circuitry 100 is also capable of performing such neuro-synaptic operations in a time-multiplexed manner. Circuitry 100 comprises a general purpose central processing unit, GP-CPU 140 configured to execute program code that is retrievable from a memory such as an instruction memory 110. Circuitry 100 further comprises a data memory 130 that may be used for storing the synaptic weights and neuron states. Circuitry 100 also comprises a loop buffer 120 that may store a micro-code. The micro-code can be loaded into the loop buffer upon instruction of the GP-CPU 140. The micro-code may comprise one or more microcode kernels. A micro-code kernel contains instructions for execution on neuron processing elements 160, further abbreviated as NPEs. The instructions are selectable from an instruction set comprising instructions for performing basic neuro-synaptic operations on the synaptic weights and neuron states as stored in the data memory 130. The instruction set also comprises instructions for storing and loading data to and from data memory 130. This data may contain synaptic weights and neuron states to which the neuro-synaptic operations are applied.

The NPE instructions are single instruction, multiple data instructions or, shortly, SIMD instructions. As such, each active NPE 160 executes the same instruction in parallel and independently from one another. When data has to be loaded into the NPEs, the loop buffer issues a load instruction to the NPEs and provides the memory address to the memory port 135. Memory port 135 then retrieves the data from the supplied memory address to the NPEs wherein each NPE receives a portion of the received data. As such, the NPEs will load different data from data memory 130. This way, each NPE may receive different synaptic weights and neuron states. When data has to be stored from the NPEs to the data memory 130, e.g. updated synaptic weights and neuron states, the loop buffer issues a store instruction to the NPEs and provides the destination memory address to the memory port 135. The concatenated data from the different NPEs 160 is then written as a single data word into data memory 130.

GP-CPU 140 may be a general purpose micro-processor supporting an instruction set architecture, ISA, for control operations of circuitry 100. For example, GP-CPU may support a RISC based ISA such as RISC-V. As GP-CPU is used as a controller rather than a processor a simple area efficient implementation may be used, e.g. a 32 bit integer and compressed instructions controller with a 2-stage pipeline such as the RISCV32-IMC CORE. GP-CPU 140 may allocate subsections in data memory 130 for neuron state, synaptic weights and axons that are processed by NPEs 160. There is no need for using physically separated memories for neuron state, synaptic weights and axons. Such unified memory architecture avoids memory fragmentation. Further, by its program code, GP-CPU 140 may map various types of neural network architectures with different data formats and sparse representations into the memory.

Circuitry 100 may further comprise an event generation circuitry 150. Circuitry 150 may receive firing events from one or more NPEs, for example when a certain neuron has fired according to a certain condition. Upon such event, circuitry 150 encodes this event in an event packet together with source information on the associated neuron. Such source information may correspond to the layer to which the neuron belongs in the neural network and which neuron within the layer has fired the event. The generated packet events may then be signalled to GP-CPU 140, e.g. by triggering an interrupt by the event circuitry 150. Upon receiving the interrupt, GP-CPU may identify that the neurons connected to the firing neurons are stored in its data memory 130. GP-CPU 100 then schedules the update of the connected neurons by supplying the micro-code kernel associated with the connected neurons to the loop buffer and providing the correct base address of the associated neuron states and synaptic weights to the loop buffer 120.

Circuitry 100 may also comprise a network on chip, NoC, interface 170. The NoC interface is configured to exchange packets with other circuitries 100 within a multi-core circuitry 101. Packets transmitted along the NoC may contain events produced by event generator circuitry 150. For example, such event may represent the firing of a certain neuron in an emulated neural network. Such firing event must be communicated to connecting neurons and synapses. Within multi-core circuitry 101 such connected neurons and synapses may be emulated within other circuitries 100. By the NoC, connections between such neurons can be emulated. For example, one circuitry 100 may emulate one layer of a neural network and another circuitry 100 may emulated a next layer of this neural network. The emulation of the first layer on one circuitry 100 may then produce triggering events for the next layer. As such, NoC interface 170 receives these events from GP-CPU 140 which, on its turn, retrieved these events from event generation circuitry 150. NoC interface then identifies the transmitting circuitry within a NoC packet and transmits it along the NoC. The second circuitry emulating the second layer then receives this packet over its NoC interface 170 and identifies that it originates from the first circuitry and, thus, the first layer. NoC interface 170 then decodes the events from the packets and signals the events over connection 171 to CP-CPU 140. GP-CPU 140 may then use these events to configure the loop buffer 120 for processing of the neurons in the second layer on the NPEs.

Circuitry 100 may also comprise a prefetch circuitry 139. This prefetch circuitry interfaces with a shared memory (not shown in Fig. 1) that is addressable by multiple circuitries 100 of the multi-core circuitry 101. GP-CPU 140 may instruct, according to its program code, the prefetch circuitry 139 to fetch a certain range of data from this shared memory. Prefetch circuitry 139 then fetches the data and copies it into data memory 130. Upon completion, prefetch circuitry 139 may signal the successful data transfer, e.g. by means of an interrupt. The prefetch circuitry 139 allows limiting the size of data memory 130, for example to the size of the neural network parts that can be emulated by the core 100, while keeping the data needed for emulating other neural networks on the multi-core circuitry.

The multi-core circuitry 101 allows time-multiplexed execution of a neural network wherein a first circuitry may emulate a first layer, forward the events to another core that emulates the second layer, and then continue with processing of new input events for the first layer of emulated the neural network.

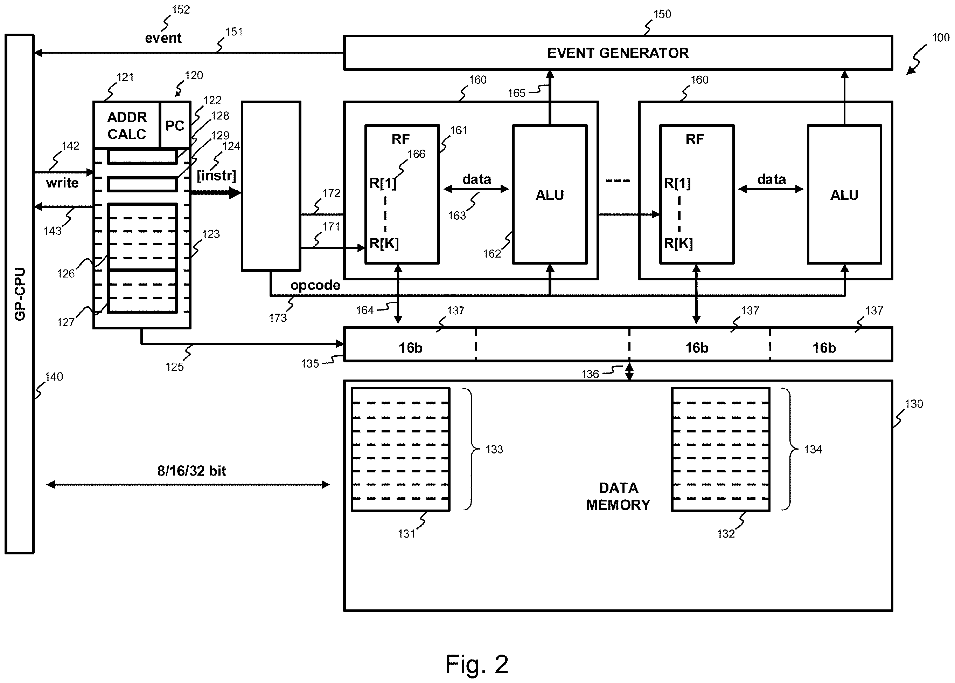

Fig. 2 illustrates further components of circuitry 100 according to a further example embodiment. As described above, circuitry 100 comprises a plurality NPEs 160, for example a positive integer number of N NPEs. In the following example embodiment, it is assumed that N=8, i.e. circuitry 100 is instantiated with eight NPEs. The more NPEs 160 are instantiated, the more parallel executions of a single SIMD instruction that can be achieved. On the other hand, this also results in a larger memory access that is needed to access the data memory by memory port 135.

A NPE 160 comprises a register file 161 having a plurality of K registers 166 starting with register R[1] and ending with R[K]. In the following example embodiment, it is assumed an NPE 160 is instantiated with K=4, i.e. an NPE 160 has four registers 166. Increasing the number of registers will increase the footprint of circuitry 100 and result in a higher power consumption. On the other hand, a large number of registers also allows for code unwinding in order to limit stalling of the NPE. An NPE 160 also comprises an arithmetic logic unit, ALU, 162, for executing the actual arithmetic operation on the data stored in the register file 161 according to the opcode 173 of the instruction. According to the example embodiment depicted in Fig. 2, the registers 166 have a width of 16bits. As such, the memory port 135 requires a word size 136 of N times 16bits, i.e. 8 x 16bits = 128bits. Each of the NPEs 160 then have access to a dedicated 16bit portion 137 of the 128bit word.

The instructions for the NPEs 160 are stored as a micro-code kernel 126 in the register-based memory 123 of the loop buffer 120. Loop buffer is configured such that it can loop or iterate over the set of instructions in the micro-code kernel. During each loop N neurons in a neural network can be updated by the respective NPEs in parallel. By looping over the micro-code kernel, this operation can be repeated a configurable amount of M times. As such M times N neurons may be updated during the execution of a micro-code kernel 126 in the loop buffer 120. Register-based memory 123 may contain more than one micro-code kernel, e.g. kernels 126 and 127. This way, GP-CPU 140 may execute different micro-code kernels depending on the circumstances without having to write (142) new code into the loop buffer 120. A micro-code kernel 126, 127 can include a set of instructions 124 that will be executed sequentially on the NPEs 160 to perform a specific task. For example, one microcode kernel 126 may contain five instructions and implement the model of a neuron update upon receival of a certain event. Another micro-code kernel 127 may contain three instructions and implement a neural activation function. During initialization of a certain neural network by circuitry 100, GP-CPU 140 may initialize the loop buffer 120 over connection 142 by writing one or several micro-code kernels into it. Then, during the run-time, i.e. when the neural network is in use or being trained, GP-CPU 140 may request the execution of a selected micro-code kernel.

According to an example embodiment, three types of codes may be written into register-based memory 123: i) a micro-code kernel 126,127, ii) memory load and store addresses 129, and iii) configuration data 128. The first type are the micro-code kernels 126, 127. These may occupy the majority of the register-based memory 123. As described above, it is possible to have several micro-code kernels 126, 127 in the loop buffer 120. The information about which micro-code kernel has to be executed may be specified in the configuration data 128. The format of an instruction in a microcode kernel may be as follows:

[OpCode(8b)] [Operandl(8b)] [Operand2(8b)] [Operand3(8)] wherein Opcode (8b) is an 8 bit opcode 173 specifying the type of instruction that will be executed by the NPEs 160; and wherein Operand3(8b), Operand2(8b) and Operand3(8b) are three 8 bit operands that may function as parameters or variables as defined by the opcode.

The load or store addresses 129 may contain base addresses within the data memory 130. Data memory 130 may be large and therefore not addressable by one of the 8bit operands of the micro-code kernel instructions. This is addressed by using a 32bit word in the register-based memory 123 to store an address referencing to the data memory 130. Memory addresses 129 may further be limited to a predefined block within the register-based memory 123, e.g. from address '1' until address '15' of the register-based memory 123 wherein address '0' contains the configuration data type 128.

The first register 128 or 'address 0' in the register-based memory 123 may be reserved for configuration data. GP-CPU 140 may write into this register 128 for interacting with the loop buffer 120, i.e. for starting execution of one of the micro-code kernels 126, 127 during run-time. The configuration field 128 may be defined as follows:

[n_repeat (8b)] [start_addr(8b)] [end_addr(8b)] and wherein n_repeat (8b) is an 8bit unsigned integer defining how many times a micro-code kernel is to be looped over and thus executed; start_addr(8b) is the address in the form of an 8bit unsigned integer indicating the first line of the microcode kernel 126 that is to be executed, and end_addr(8b) is the address in the form of an 8bit unsigned integer indicating the last line of the micro-code kernel 126 that is to be executed.

GP-CPU 140 interacts with the loop buffer 120 by writing into the register-based memory 123. For this, GP-CPU 140 may be configured with write access 142 to the register-based memory 123. GP-CPU 140 may then write into the register-based memory 123 when loop buffer 120 is not executing a micro-code kernel. Writing operations by the GP-CPU 140 may be given priority over writing operations by the loop buffer 120 itself.

When loop buffer 120 finishes the execution of a micro-code kernel 126, 127 it may be arranged to raise an interrupt signal 143 to GP-CPU 140. Upon receival of this interrupt signal 143, GP-CPU may reconfigure the loop buffer 120 to execute another micro-code kernel. Loop buffer 120 may also provide a flag to signal that it is not executing a micro-code kernel, i.e. that it is in idle mode. Such flag may be readable by GP-CPU 140 to verify whether the loop buffer 120 is executing or idle.

An NPE instruction set will now be described according to an example embodiment. The instruction set contains instructions than can be executed in the ALU 162 of the NPEs. An instruction follows the following format:

[OpCode] [Op1] [Op2] [Op3] Wherein the Opcode is an operation code or opcode 173 defining the operation that is to be executed by the ALU 162 and Op1, Op2, Op3 are the operands of which the meaning depends on the value of the opcode. The instructions 124 are provided by the loop buffer 120 from the micro-code kernel 126, 127 that is under execution.

The following table lists different instructions that may be supported by the NPEs 160. The first column is an unsigned integer that may be used for the binary representation of the opcode 173 within the circuitry. The second column is a three letter representation of the opcode 173. The third column contains a description of the opcode's function in terms of the opcodes operands Op1, Op2, and Op3. The notation R[op] refers to the register 166 of the NPE's register file 161 to which the operand refers.

*Table 1: Instruction set for NPE*

| | OpCode | Function |
|---|---|---|
| 0 | NOP | No operation |
| 1 | ADD | R[op3] = R[op1] + R[op2] |
| 2 | SUB | R[op3] = R[op1] - R[op2] |
| 3 | MUL | R[op3] = R[op1] * R[op2] |
| 4 | DIV | R[op3] = R[op1] / R[op2] |
| 5 | RND | R[op3] = Round(R[op1]) |
| 6 | GTH | R[op3] = (R[op1]>R[op2]) |
| 7 | GEQ | R[op3] = (R[op1]>=R[op2]) |
| 8 | EQL | R[op3] = (R[op1]==R[op2]) |
| 9 | MAX | R[op3] = max(R[op1],R[op2]) |
| 10 | MIN | R[op3] = min(R[op1],R[op2]) |
| 11 | ABS | R[op3] = absolute(R[op1]) |
| 12 | I2F | R[op3] = FP(R[op1]); R[op2] is used for configuration |
| 13 | AND | R[op3] = R[op1] & R[op2] (bitwise AND) |
| 14 | ORR | R[op3] = R[op1] \| R[op2] (bitwise OR) |
| 15 | SHL | R[op3] = R[op1]« R[op2] (logical shift) |
| 16 | SHR | R[op3] = R[op1]» R[op2] (logical shift) |
| 17 | MLD | R[Op3] = Dmem[address] (Memory Load) Address = MK[Op1], MK[Op1] += Op2 |
| 18 | MST | Dmem[address] = R[Op1] Memory Store Address = MK[op3], MK[Op1] += Op2 |
| 19 | EVC | Event generated for non-zero values: - Event Value = R[op1] - Event Tag = Op2, Op2 += Op3 (signed int) |

The NOP opcode will cause the NPEs 160 to skip a clock cycle without executing any function.

The opcodes 1 to 5 are arithmetic operations wherein ADD makes the ALU perform an addition, SUB a subtraction, MUL a multiplication, DIV a division, and RND a rounding operation to the closest integer. The operands of the arithmetic operations may be in the bfloat16 (Brain Floating Point) computer number format occupying 16 bits. This format is a truncated 16 bit version of the 32 bit IEEE 754 single-precision floating-point format. The format defines a single sign bit (S), an 8 bit Exponent (E) and a 7 bit Mantissa (M). When the Exponent is zero, the represented value is zero. When the Exponent is not zero, the value is defined as:

$$(-1)^S \times (1 + M \times 2^{-7}) \times 2^{E-127}$$

The opcodes 6, 7 and 8 define logical operations returning zero for false or one for true. GTH defines the greater than operation, GEQ defines the greater than or equal to operation, and EQL defines the identity operation. The opcodes 9, 10, 11 define comparison operations wherein MAX returns the maximum of two operands, MIN returns the minimum, and ABS returns the absolute value of the operand.

The NPEs execute the instructions according to a 16 bit format. Data in the data memory may also be stored in a compressed formation, e.g. in a compressed integer 4 bit or 8 bit format. Upon fetching a value from the data memory, the NPE may then have to convert the 4 bit or 8 bit format to the internal 16 bit format. This may be done by the I2F operation that will convert the value in R[op1] to floating point and store it in R[op3]. The specific conversion may then be specified in R[op2] as follows:

```
R[op2] = [4b_flit_select(4b)][Signed not Unsigned (1b)]
         [shared exponent (8b)]
```

The 4 bit 4b_flit_select field defines where the 4- or 8 bit value is located in the 16 bit register field of the operand R[op1]. The 16 bit register field is divided into 4 times 4 bits and used by the 4b_flit_select field to select the relevant bits. For example, when 4b_flit_select equals '0011' the selected bits for conversion are the 8 least significant bits of the operand R[op1]. Valid options for this 4b_flit_select field are [0001, 0010, 0100, 1000] for a 4-bit integer data type and [0011, 1100] for an 8-bit integer data type. The Signed not Unsigned field defines if the integer number is signed or unsigned. This allows for increased resolution for unsigned integers. The shared exponent field defines the exponent field for the bfloat16 format. This allows sharing an exponent for a range of integer fixed point data, i.e. using the exponent as a scaling factor for a group of quantized data. As a result, the integer number will be represented in the NPE 160 as being multiplied by $2^{shared\_exp-127}$.

Opcodes 13 to 16 define bitwise operations. Such operations are performed over the individual bits and therefore not dependent on the type of data.

Opcode 17 (MLD) is a load instruction that loads the 16bit word from memory port 137 into register R[op3]. The address of the data in the data memory is not specified in the operands but directly provided (125) by the loop buffer 120 to the memory port 135. The address calculation is performed by address calculation circuitry 121 upon fetching the MLD instruction from the micro-code kernel 126, 127. Upon fetching the MLD instruction, the loop buffer 120 retrieves the memory address from the register-based memory 123 from the location specified in operand 1 (op1) of the instruction. This location corresponds to a memory load and store address 129 as described above. The address at this location, represented by MK[op1] in the above table, is then retrieved and forwarded (125) the memory port 135. As the loop buffer 120 is iterating over the micro-code kernel 126, 127 the address is then updated by address calculation circuitry 121 by incrementing it with the value specified in operand 2 (op2). As a result, at a next execution of the same instruction a new address will be fetched from MK[op1].

Opcode 18 (MST) is a store instruction for storing the content of register R[op1] into the data memory. When the loop buffer 120 retrieves such an MST instruction from the register-based memory 123 it will first retrieve the destination address for the store operation from one of the memory load and store address 129. The location of this address field is specified by third operand (op3) of the instruction. This address is then retrieved and provided to the memory port 135. When the NPEs 160 then execute the MST instruction, the content of register R[op1] is then fetched by memory port 135 and stored in the data memory 130 at the location as specified by the address 125. As the loop buffer is iterating over the instructions of the micro-code kernel, the address calculation circuitry 121 then updates the address value for use in the next iteration. The updating is performed by adding the value of the second operand op2 in the MST instruction to the address value stored in location MK[op1] of the register-based memory 123.

In other words, after every access to the data memory 130, either by an MST or MLD instruction, the address that is stored in the memory load and store address field 129 will be updated by the value in operand 2 (op2). For example, when a microcode kernel is expected to update the state of 256 neurons and there are 8 NPEs, then the loop buffer will iterate 32 times over the micro-code kernel. In every loop, the micro-code kernel needs to access another row of data in the data memory 130 to update the corresponding neurons. These 32 iterations can then be executed without any interference from the GP-CPU.

The opcode 19 of the instruction set is an event capture instruction (EVC). By this instruction, values in the register files 161 of the NPEs 160 may be communicated to the GP-CPU 140. The EVC allows signalling these values in a sparse representation by skipping elements with a zero value. When the NPEs fetch an EVC instruction, they provide an Event Value and Event Tag as data 165 to an event generator circuitry 150. The Event Value is the content of register R[op1] and may for example correspond to the output of a neuron that is to be communicated to other neurons. The Event Tag is the content of operand op2. Upon providing the Event Tag to event generation circuitry 150, the content of operand op2 is incremented with operand 3 which represents a signed integer. The Event Tag allows identifying the iteration during which the event was generated. This may be used to identify which neuron has generated the event.

When an EVC instruction is executed, the event generation circuitry may receive Event Tags and Values from any of the NPEs. The number of non-zero Event Values may range from zero to the number of active NPEs. When a non-zero Event Value arrives at event generator circuitry 150, it signals the event to the GP-CPU, e.g. by means of an interrupt. When signalling the event, the event generator circuitry provides the Event Value, the Event Tag and an identification of the NPE that triggered the event, for example by a number ranging from 1 to N. With this information, GP-CPU may then determine which NPE raised the event and during which iteration. From this, the GP-CPU 140 may further derive which neuron in the neural network caused the event.

Event generator circuitry 150 may comprise a first in, first out, FIFO, memory to provide the events 151 comprising the Event Value, the Event Tag and an identification of the NPE to the GP-CPU. Upon receiving an interrupt from the event generator circuitry 150, GP-CPU 140 may then read out the event from the FIFO. GP-CPU 140 may iteratively read out the buffer until all generated events have been read out. The FIFO memory may have four addressable memory fields comprising respectively the Event Value, the Event Tag, the identification of the triggering NPE, and a value indicative for whether there is another event waiting in the FIFO. This way, GP-CPU 140 may read a plurality of events 152 from the memory queue in response to a single interrupt from the event generator circuitry 150.

Event generator circuitry 150 may be used by GP-CPU 140 for signalling events within a single neuro-synaptic processing circuitry 100. When neuro-synaptic processing circuitry 100 is part of a large scale digital neuromorphic processor 101, circuitry 100 may further comprise a communication interface 170 for receiving events from other neuro-synaptic processing circuitries 100 or for transmitting events to other neuro-synaptic processing circuitries 100.

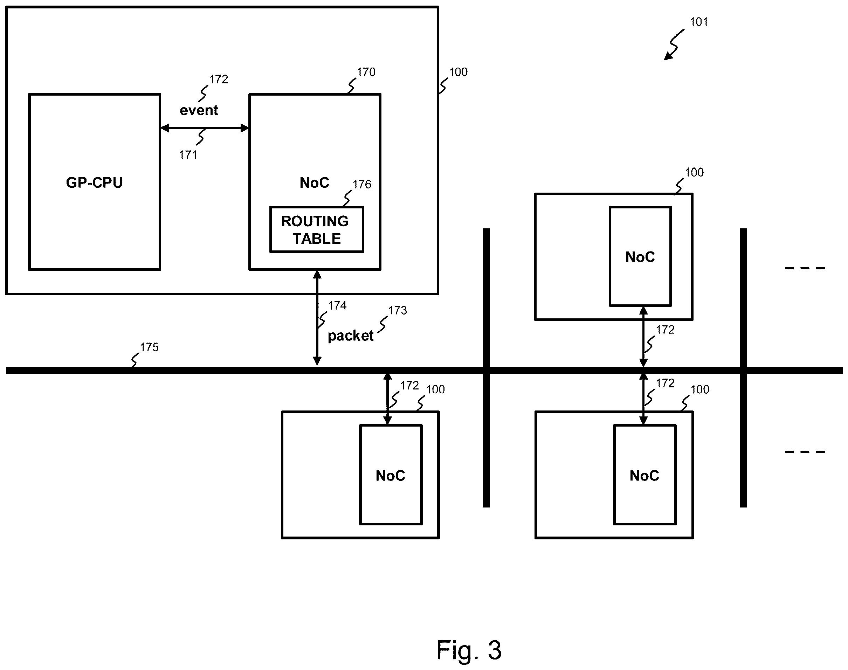

To this purpose, communication interface 170 may correspond to a network on chip, NoC, interface 170 as also depicted in Fig. 3. NoC interface 170 may receive events 172 from GP-CPU 140 over communication interface 171. Events 172 may comprise Event Values, Event Tags, and a NPE identification as received by GP-CPU 140 from event generator circuitry 150. GP-CPU may send such event 172 to NoC interface 170 when is receives an event 151 with an Event Value for a neuron that is not stored within data memory 130 of the present circuitry 100. NoC interface 170 then encodes the event into a NoC packet 173. NoC interface 170 may add an identification of the circuitry 100 that generated the event to such NoC packet. NoC interface 170 may also encode a plurality of such events into a single NoC packet 173. NoC interface 170 then transmits packet 173 along communication interface 174 onto a NoC bus 175. This NoC bus 175 is configured to communicate the packet 173 to the other NoC interfaces 170 of the other neuro-synaptic processing circuitries 100 on the large scale digital neuromorphic processor 101.

According to example embodiments, the NoC interfaces 170 and other NoC components forming the NoC may operate according to a multicast source-based addressing scheme. NoC interface 170 may then comprise a source address based routing table 176. When a packet 173 is then received over interface 174, the NoC interface 170 verifies whether the packet 173 is destined for the present circuitry 100. This verification is based on the source address information comprised in packet 173, e.g. an identification of the circuitry 100 that transmitted the packet, or a combination of such identification with the Event Tag and/or NPE identification comprised within the events within packet 173. This source address information is then matched with source address information stored within routing table 176. If a match is found, NoC interface 170 decodes the events from the packet 173 and provides the events 172 to the GP-CPU 140, e.g. by raising an interrupt to GP-CPU 140. GP-CPU may then, according to its program code, initiate a micro-code kernel that processes the event 172 with the associated neuron or neurons in the NPEs 160.

As used in this application, the term "circuitry" may refer to one or more or all of the following:

(a) hardware-only circuit implementations such as implementations in only analog and/or digital circuitry and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1.  A neuro-synaptic processing circuitry (100) for performing neuro-synaptic operations based on synaptic weights (131) and neuron states (132) and comprising:

    - a data memory (130) for storing the synaptic weights and neuron states; the data memory having a first memory port (135) for loading and storing data (136) from and to the data memory;
    - a plurality of neuron processing elements, NPEs, (160) configurable to execute NPE instructions (124) in parallel according to a single instruction, multiple data, SIMD, instruction set; wherein the NPEs have access to respective portions (137) of the memory port; the SIMD instruction set comprising instructions for loading and storing the synaptic weights and neuron states from and to the memory port, and for performing the neuro-synaptic operations;
    - a general-purpose central processing unit, GP-CPU, (140) configured to execute program code;
    - a loop buffer (120) having a register-based memory (123); an address calculation unit (121); and a program counter (122);

    wherein the loop buffer is configured to:

    - receive a micro-code kernel (142) from the GP-CPU in the register-based memory according to the program code; the micro-code kernel comprising the NPE instructions (124);
    - upon instruction of the GP-CPU, execute the micro-code kernel by iteratively providing, the NPE instructions (224) to the NPEs for execution;
    - upon a load or store instruction, further providing a memory address (125) stored in the loop buffer to the memory port and, by the address calculation unit, updating the memory address.

2.  The neuro-synaptic processing circuitry (100) according to claim 1 wherein memory ranges (133, 134) and locations in the data memory for storing the synaptic weights and neuron states are configurable by the GP-CPU.

3.  The neuro-synaptic processing circuitry (100) according to claim 1 or 2 wherein the GP-CPU is configured to, under instruction of the program code, upon a triggering event, to start execution of the micro-code kernel.

4.  The neuro-synaptic processing circuitry (100) according to any one of the preceding claims wherein the loop buffer is further configured to store a plurality of micro-code kernels in the register-based memory and to execute a select micro-code kernel upon instruction of the GP-CPU.

5.  The neuro-synaptic processing circuitry (100) according to any one of the preceding claims wherein the GP-CPU is configured to, under instruction of the program code, disable one or more of the NPEs.

6. The neuro-synaptic processing circuitry (100) according to any one of the preceding claims wherein the synaptic weights and/or neuron states in the data memory have a configurable data-type, such as one or more fixed-point data-type and/or one or more data-types with a fixed-point portion and a scaling portion; and wherein the SIMD instruction set comprises instructions for converting said data-type to a data-type supported by the NPEs.

7. The neuro-synaptic processing circuitry (100) according to any one of the preceding claims wherein the synaptic weights and/or neuron states in the data memory have a configurable bit width fitting within sub-portions of the respective portions of the memory port; and wherein the SIMD instruction set comprises instructions for selecting said sub-portion from different positions within the respective portions.

8. The neuro-synaptic processing circuitry (100) according to any one of the preceding claims wherein the NPEs are configured to, upon triggering a condition during the execution, trigger an output event (165).

9. The neuro-synaptic processing circuitry (100) according to claim 8 further comprising an event generation circuitry (150) configured to receive output events (165) from the NPEs, to buffer the output events, and to interrupt (151) the GP-CPU to signal the occurrence of the output events.

10. The neuro-synaptic processing circuitry (100) according to claim 9 wherein the event generation circuitry is further configured to encode one or more of the output events into a packet and to include an address of a neuron generating the output event into the packet.

11. A neuro-synaptic multicore processing circuitry (101) comprising a plurality of neuro-synaptic processing circuitries (100) according to any one of the preceding claims.

12. The neuro-synaptic multicore processing circuitry (101) according to claim 11 and any one of claims 7 to 10 further comprising a network-on-chip (170), NoC, for transmitting packets with events among the plurality of neuro-synaptic processing circuitries.

13. The neuro-synaptic multicore processing circuitry (140) according to claim 11 wherein the NoC is a multicast, source-based addressing NoC.

14. The neuro-synaptic multicore processing circuitry (140) according to any one of claim 11 to 13 further comprising a shared memory accessible by the GP-CPUs; and wherein a respective GP-CPU is configured to, under instruction of the program code, pre-fetch the synaptic weights and/or neuron states from the shared memory to the data memory.

**Patentansprüche**

1. Neurosynaptische Verarbeitungsschaltung (100) zum Durchführen von neurosynaptischen Operationen basierend auf synaptischen Gewichten (131) und Neuronenzuständen (132) und umfassend:

   - einen Datenspeicher (130) zum Speichern der synaptischen Gewichte und Neuronenzustände; wobei der Datenspeicher einen ersten Speicheranschluss (135) zum Laden und Speichern von Daten (136) aus dem und in den Datenspeicher aufweist;
   - eine Vielzahl von Neuronenverarbeitungselementen, NPEs, (160), die konfigurierbar ist, um NPE-Anweisungen (124) gemäß einem Einzelanweisungs-, Mehrfachdaten-, SIMD-Anweisungssatz parallel auszuführen; wobei die NPEs Zugriff auf jeweilige Teile (137) des Speicheranschlusses haben; wobei der SIMD-Anweisungssatz Anweisungen zum Laden und Speichern der synaptischen Gewichte und Neuronenzustände aus dem und in den Speicheranschluss und zum Durchführen der neurosynaptischen Operationen umfasst;
   - eine universelle zentrale Verarbeitungseinheit, GP-CPU (140), die konfiguriert ist, um Programmcode auszuführen;
   - einen Schleifenpuffer (120) mit einem registerbasierten Speicher (123); einer Adressberechnungseinheit (121); und einem Programmzähler (122);

   wobei der Schleifenpuffer zu Folgendem konfiguriert ist:

   - Empfangen eines Mikrocodekernels (142) von der GP-CPU in dem registerbasierten Speicher gemäß dem Programmcode; wobei der Mikrocodekernel die NPE-Anweisungen (124) umfasst;

- bei Anweisung der GP-CPU, Ausführen des Mikrocodekernels, indem die NPE-Anweisungen (224) den NPEs iterativ zur Ausführung bereitgestellt werden;
- bei einer Lade- oder Speicheranweisung ferner Bereitstellen einer Speicheradresse (125), die in dem Schleifenpuffer gespeichert ist, an den Speicheranschluss und durch die Adressberechnungseinheit Aktualisieren der Speicheradresse.

2. Neurosynaptische Verarbeitungsschaltung (100) nach Anspruch 1, wobei Speicherbereiche (133, 134) und Orte in dem Datenspeicher zum Speichern der synaptischen Gewichte und Neuronenzustände durch die GP-CPU konfigurierbar sind.

3. Neurosynaptische Verarbeitungsschaltung (100) nach Anspruch 1 oder 2, wobei die GP-CPU konfiguriert ist, um unter Anweisung des Programmcodes bei einem auslösenden Ereignis Ausführung des Mikrocodekernels zu starten.

4. Neurosynaptische Verarbeitungsschaltung (100) nach einem der vorhergehenden Ansprüche, wobei der Schleifenpuffer ferner konfiguriert ist, um eine Vielzahl von Mikrocodekernen in dem registerbasierten Speicher zu speichern und um einen ausgewählten Mikrocodekernel bei Anweisung der GP-CPU auszuführen.

5. Neurosynaptische Verarbeitungsschaltung (100) nach einem der vorhergehenden Ansprüche, wobei die GP-CPU konfiguriert ist, um unter Anweisung des Programmcodes eines oder mehrere der NPEs zu deaktivieren.

6. Neurosynaptische Verarbeitungsschaltung (100) nach einem der vorhergehenden Ansprüche, wobei die synaptischen Gewichte und/oder Neuronenzustände in dem Datenspeicher einen konfigurierbaren Datentyp aufweisen, wie einen oder mehrere Festkommadatentypen und/oder einen oder mehrere Datentypen mit einem Festkommateil und einem Skalierungsteil; und wobei der SIMD-Anweisungssatz Anweisungen zum Konvertieren des Datentyps in einen Datentyp umfasst, der durch die NPEs unterstützt wird.

7. Neurosynaptische Verarbeitungsschaltung (100) nach einem der vorhergehenden Ansprüche, wobei die synaptischen Gewichte und/oder Neuronenzustände in dem Datenspeicher eine konfigurierbare Bitbreite aufweisen, die in Unterteile der jeweiligen Teile des Speicheranschlusses passt; und wobei der SIMD-Anweisungssatz Anweisungen zum Auswählen des Unterteils aus unterschiedlichen Positionen innerhalb der jeweiligen Teile umfasst.

8. Neurosynaptische Verarbeitungsschaltung (100) nach einem der vorhergehenden Ansprüche, wobei die NPEs konfiguriert sind, um bei Auslösen einer Bedingung während der Ausführung ein Ausgabeereignis (165) auszulösen.

9. Neurosynaptische Verarbeitungsschaltung (100) nach Anspruch 8, ferner umfassend eine Ereigniserzeugungsschaltung (150), die konfiguriert ist, um Ausgabeereignisse (165) von den NPEs zu empfangen, um die Ausgabeereignisse zu puffern und um die GP-CPU zu unterbrechen (151), um das Auftreten der Ausgabeereignisse zu signalisieren.

10. Neurosynaptische Verarbeitungsschaltung (100) nach Anspruch 9, wobei die Ereigniserzeugungsschaltung ferner konfiguriert ist, um eines oder mehrere von den Ausgabeereignissen in ein Paket zu kodieren und um eine Adresse eines Neurons, welches das Ausgabeereignis erzeugt, in das Paket aufzunehmen.

11. Neurosynaptische Multicore-Verarbeitungsschaltung (101), die eine Vielzahl von neurosynaptischen Verarbeitungsschaltungen (100) nach einem der vorhergehenden Ansprüche umfasst.

12. Neurosynaptische Multicore-Verarbeitungsschaltung (101) nach Anspruch 11 und einem der Ansprüche 7 bis 10, ferner umfassend ein Network-on-Chip (170), NoC, zum Übertragen von Paketen mit Ereignissen unter der Vielzahl von neurosynaptischen Verarbeitungsschaltungen.

13. Neurosynaptische Multicore-Verarbeitungsschaltung (140) nach Anspruch 11, wobei das NoC ein Multicast-NoC mit quellenbasierter Adressierung ist.

14. Neurosynaptische Multicore-Verarbeitungsschaltung (140) nach einem von Anspruch 11 bis 13, ferner umfassend einen gemeinsamen Speicher, auf den die GP-CPUs zugreifen können; und wobei eine jeweilige GP-CPU konfiguriert ist, um unter Anweisung des Programmcodes die synaptischen Gewichte und/oder Neuronenzustände aus dem gemeinsamen Speicher in den Datenspeicher vorzuladen.

**Revendications**

1. Circuit de traitement neuro-synaptique (100) permettant de réaliser des opérations neuro-synaptiques sur la base de poids synaptiques (131) et d'états de neurones (132) et comprenant :

   - une mémoire de données (130) destinée à stocker les poids synaptiques et les états de neurones ; la mémoire de données possédant un premier port de mémoire (135) en vue du chargement et du stockage de données (136) à partir de la mémoire de données et vers celle-ci ;
   - une pluralité d'éléments de traitement de neurones, NPE, (160) configurables pour exécuter des instructions NPE (124) en parallèle selon un ensemble d'instructions à instruction unique et données multiples,SIMD ; les NPE possédant un accès à des parties respectives (137) du port de mémoire ; l'ensemble d'instructions SIMD comprenant des instructions pour charger et stocker les poids synaptiques et les états de neurones à partir du port mémoire et vers celui-ci, et pour réaliser les opérations neuro-synaptiques ;
   - une unité centrale de calcul à usage général, GP-CPU, (140) configurée pour exécuter un code de programme ;
   - un tampon de boucle (120) possédant une mémoire à base de registres (123) ; une unité de calcul d'adresse (121) ; et un compteur de programme (122) ;

   ledit tampon de boucle étant configuré pour :

   - recevoir un noyau de microcode (142) en provenance du GP-CPU dans la mémoire à base de registres selon le code de programme ; le noyau de microcode comprenant les instructions NPE (124);
   - sur instruction de la GP-CPU, exécuter le noyau du microcode en fournissant de manière itérative les instructions NPE (224) aux NPE en vue de leurs exécutions ;
   - lors d'une instruction de chargement ou de stockage, fournir en outre une adresse mémoire (125) stockée dans le tampon de boucle au port mémoire et, au moyen de l'unité de calcul d'adresse, mettre à jour l'adresse mémoire.

2. Circuit de traitement neuro-synaptique (100) selon la revendication 1, lesdites plages de mémoire (133, 134) et lesdits emplacements dans la mémoire de données destinés au stockage des poids synaptiques et des états de neurones étant configurables par la GP-CPU.

3. Circuit de traitement neuro-synaptique (100) selon la revendication 1 ou 2, ladite GP-CPU étant configurée pour, sur instruction du code de programme, lors d'un événement déclencheur, démarrer l'exécution du noyau de microcode.

4. Circuit de traitement neuro-synaptique (100) selon l'une quelconque des revendications précédentes, ledit tampon de boucle étant en outre configuré pour stocker une pluralité de noyaux de microcode dans la mémoire à base de registres et pour exécuter un noyau de microcode sélectionné sur instruction de la GP-CPU.

5. Circuit de traitement neuro-synaptique (100) selon l'une quelconque des revendications précédentes, ladite GP-CPU étant configurée pour, sur instruction du code de programme, désactiver un ou plusieurs des NPE.

6. Circuit de traitement neuro-synaptique (100) selon l'une quelconque des revendications précédentes, lesdits poids synaptiques et/ou lesdits états de neurones dans la mémoire de données possédant un type de données configurable, tel qu'un ou plusieurs types de données à virgule fixe et/ou un ou plusieurs types de données avec une partie à virgule fixe et une partie de mise à l'échelle ; et ledit ensemble d'instructions SIMD comprenant des instructions pour convertir ledit type de données en un type de données pris en charge par les NPE.

7. Circuit de traitement neuro-synaptique (100) selon l'une quelconque des revendications précédentes, lesdits poids synaptiques et/ou lesdits états de neurones dans la mémoire de données possédant une largeur de bits configurable s'adaptant à des sous-parties des parties respectives du port de mémoire ; et ledit ensemble d'instructions SIMD comprenant des instructions pour sélectionner ladite sous-partie à partir de différentes positions dans les parties respectives.

8. Circuit de traitement neuro-synaptique (100) selon l'une quelconque des revendications précédentes, lesdits NPE étant configurés pour, lors du déclenchement d'une condition durant l'exécution, déclencher un événement de sortie (165).

**9.** Circuit de traitement neuro-synaptique (100) selon la revendication 8 comprenant en outre un circuit de génération d'événements (150) configuré pour recevoir des événements de sortie (165) en provenance des NPE, pour mettre en mémoire tampon les événements de sortie et pour interrompre (151) la GP-CPU pour signaler la survenance des événements de sortie.

**10.** Circuit de traitement neuro-synaptique (100) selon la revendication 9, ledit circuit de génération d'événements étant en outre configuré pour coder un ou plusieurs des événements de sortie dans un paquet et pour comprendre une adresse d'un neurone générant l'événement de sortie dans le paquet.

**11.** Circuit de traitement multicoeur neuro-synaptique (101) comprenant une pluralité de circuits de traitement neuro-synaptiques (100) selon l'une quelconque des revendications précédentes.

**12.** Circuit de traitement multicoeur neuro-synaptique (101) selon la revendication 11 et l'une quelconque des revendications 7 à 10 comprenant en outre un réseau sur puce (170), NoC, pour transmettre des paquets avec des événements parmi la pluralité de circuits de traitement neuro-synaptiques.

**13.** Circuit de traitement multicoeur neuro-synaptique (140) selon la revendication 11, ledit NoC étant un NoC d'adressage basé sur la source et multidiffusion.

**14.** Circuit de traitement multicoeur neuro-synaptique (140) selon l'une quelconque des revendications 11 à 13 comprenant en outre une mémoire partagée accessible par les GP-CPU ; et une GP-CPU respective étant configurée pour, sur instruction du code de programme, pré-extraire les poids synaptiques et/ou les états de neurones de la mémoire partagée vers la mémoire de données.

Fig. 1

EP 4 287 076 B1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Efficient Configuration for a Scalable Spiking Neural Network Platform by means of a Synchronous Address Event Representation bus. **ZAPATA MIREYA et al.** 2018 NASA/ESA CONFERENCE ON ADAPTIVE HARDWARE AND SYSTEMS (AHS). IEEE, 06 August 2018, 241-248

- A near-threshold RISC-V core with DSP extensions for scalable IoT Endpoint Devices. **MICHAEL GAUTSCHI et al.** ARXIV.ORG. CORNELL UNIVERSITY LIBRARY, 30 August 2016
- The neuro vector engine: Flexibility to improve convolutional net efficiency for wearable vision. **PREEMEN MAURICE et al.** 2016 DESIGN, AUTOMATION & TEST IN EUROPE CONFERENCE & EXHIBITION (DATE). EDAA, 14 March 2016, 1604-1609